# EUROPÄISCHE PATENTANMELDUNG

(11) **EP 2 605 457 A1**
(43) Veröffentlichungstag der Anmeldung: **19.06.2013**
(21) Anmeldenummer: 12193655.3
(22) Anmeldetag: 21.11.2012
(51) Int. Cl.: H04L 12/40

(54) **Verfahren zum Übertragen von Nutzdaten**

(30) Priorität: 16.12.2011 DE 102011088812
(71) Anmelder: GE Energy Power Conversion GmbH, 12277 Berlin (DE)
(72) Erfinder: Jebenstreit, Helmut, 12101 Berlin (DE); Wothe, Franck, 13681 Berlin (DE)
(74) Vertreter: Dreiss

(57) **Zusammenfassung**

Es wird ein Verfahren zum Übertragen von Nutzdaten von einer Ursprungs-Anwendung (20) eines Ursprungs-Rechengeräts (4) an eine Ziel-Anwendung (22; 24) zumindest eines Ziel-Rechengeräts (6; 8) beschrieben. Das Ursprungs-Rechengerät (4) und das Ziel-Rechengerät (6; 8) sind mittels Ethernet-Technik verbunden. Bei dem Verfahren werden folgende zeitlich aufeinanderfolgende Schritte ausgeführt: Erzeugen eines Ethernet-Telegramms durch das Ursprungs-Rechengerät (4), wobei das Telegramm die Nutzdaten umfasst, und Versenden des Ethernet-Telegramms durch das Ursprungs-Rechengerät (4) an das Ziel-Rechengerät (6; 8). Beim Erzeugen des Ethernet-Telegramms wird über eine MAC-Zieladresse immer genau dasjenige, zumindest eine Ziel-Rechengerät (6; 8) festgelegt, für dessen Ziel-Anwendung 22; 26) die Nutzdaten bestimmt sind. Das Ursprungs-Rechengerät (4) ist stets sendeberechtigt. Das Ethernet-Telegramm wird verbindungslos an das Ziel-Rechengerät (6; 8) versendet.

## Beschreibung

Die Erfindung betrifft ein Verfahren zum Übertragen von Nutzdaten nach dem Oberbegriff des Anspruchs 1.

Dass Rechengeräte mittels der Ethernet-Technik zu einem Ethernet-Netzwerk zur Datenübertragung miteinander verbunden werden können, ist bekannt.

Des Weiteren sind auf der Ethernet-Technik aufbauende Netzwerkprotokolle bekannt, die als sogenannte Feldbus-Systeme im Bereich der Automatisierungstechnik Anwendung finden. Beispiele hierfür sind Ethernet POWER LINK oder EtherCAT. EtherCAT ist eine eingetragene Marke von Hans Beckhoff. Diese Protokolle erfordern spezielle Hardware und/oder benötigen zusätzliche Rechengeräte beziehungsweise Netzwerkknoten insbesondere zur Arbitrierung, das heißt zur Zeitschlitzzuweisung zum Senden von Nutzdaten.

Aus der DE 10 2005 008 503 B3 ist ein Verfahren zur Datenübertragung bekannt, bei dem eine Verbindungsinformation über zumindest ein Übertragungs- oder Weiterleitungsziel in einem Block für Daten aufgenommen wird. Der Block wird in Form einer Zelle über eine oder mehrere Vermittlungsstationen übertragen.

Aufgabe der Erfindung ist es, ein Verfahren zu schaffen, das die Übertragung von Nutzdaten vereinfacht und den Aufwand zum Aufbau eines entsprechenden Netzwerks reduziert.

Die Aufgabe wird durch ein Verfahren zum Übertragen von Nutzdaten nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Dadurch, dass das Ursprungs-Rechengerät stets sendeberechtigt ist, ist ein Multi-Master-Betrieb durch das Verfahren möglich, wobei jedes Ursprungs-Rechengerät ein Ethernet-Telegramm jederzeit versenden darf beziehungsweise sendebereit setzen darf. Weitere Rechengeräte, die beispielsweise Zeitschlitze zum Versenden von Ethernet-Telegrammen dem jeweiligen Ursprungs-Rechengerät vorgeben, werden daher nicht benötigt. Dadurch kann die Übertragungszeit verringert werden.

Dadurch, dass beim Erzeugen des Ethernet-Telegramms über eine MAC-Zieladresse immer genau zumindest ein Ziel-Rechengerät festgelegt wird, für dessen Ziel-Anwendung die Nutzdaten bestimmt sind, werden weitere Übertragungsprotokolle, wie beispielsweise das Internet-Protokoll (IP), nicht benötigt. Auch sind keine Vermittlungsschritte zwischen unterschiedlichen Netzwerken bzw. über weitere Protokolle erforderlich, bei denen in Abhängigkeit von den Nutzdaten und dem Ziel-Rechengerät die Nutzdaten beispielsweise in mehrere Telegramme aufgeteilt werden, oder wobei diese mehreren Telegramme unterschiedliche Wege durch verbundene Netzwerke nehmen könnten. Durch die somit erreichte Verringerung von zu übertragenden Daten ergibt sich eine geringere Netzwerklast und damit eine schnellere Übertragung der Nutzdaten. Auch die Vermeidung von Vermittlungsschritten trägt zu einer schnellen Übertragung der Nutzdaten bei.

Das verbindungslose Versenden von Ethernet-Telegrammen reduziert weiter die zu übertragende Datenmenge. Die reduzierte Datenmenge und der weggelassene Verbindungsauf-und -abbau tragen dazu bei, dass ein Ereignis, das auf dem Ursprungs-Rechengerät erfasst wird, möglichst schnell der Anwendung des Ziel-Rechengeräts mitgeteilt werden kann.

Darüber hinaus können Standard-Ethernetkomponenten, wie beispielsweise Ethernet-Bausteine und Standard-Ethernet-Kabel verwendet werden, was den Einsatz speziell angepasster Hardware und/oder Software überflüssig macht. Vorzugsweise wird in einem Ethernet-Netzwerk nur das beanspruchte Verfahren verwendet, um jeglichen anderen Netzwerkverkehr zu vermeiden und damit die Qualität der Nutzdatenübertragung insbesondere hinsichtlich der Übertragungszeit zu verbessern.

Beim Erzeugen des Ethernet-Telegramms werden vorteilhaft über die MAC-Zieladresse mehrere Ziel-Rechengeräte zum Empfang des Ethernet-Telegramms festgelegt, wodurch nur eine einzige Übertragung der Nutzdaten nötig ist und die Belastung des Ethernet-Netzwerkes durch Ethernet-Telegramme reduziert wird, was hinsichtlich der zu übertragenden Nutzdaten insgesamt zu einer schnelleren Übertragung führt. In diesem Zusammenhang führt der Einsatz eines Switches, insbesondere eines Store-and-Forward-Switches, der empfangenen Ethernet-Telegramme zwischenspeichert, dazu, dass jedes Ursprungs-Rechengerät, das an das Ethernet-Netzwerk angeschlossen ist, gleichzeitig senden kann, da der Switch an mehreren Anschlüssen gleichzeitig Ethernet-Telegramme annehmen kann.

In einer vorteilhaften Weiterbildung des Verfahrens wird über die MAC-Zieladresse eine Gruppe von über die Ethernet-Technik verbundenen Rechengeräten adressiert. Im Falle des Einsatzes des Switches leitet dieser alle Ethernet-Telegramme an alle anderen Rechengeräte weiter, weshalb jedes Rechengerät alle derart adressierten Ethernet-Telegramme "sieht". Vorteilhaft verwirft ein nicht über eine Gruppe von Rechengeräten adressiertes Rechengerät ein Ethernet-Telegramm bereits beim Empfang. Dadurch entsteht eine verringerte Belastung des nicht adressierten Rechengeräts im Bereich der Kommunikationsschicht und/oder der Anwendungsschicht.

In einer vorteilhaften Weiterbildung wird beim Erzeugen des Ethernet-Telegramms in dem Ethernet-Nutzdaten-Feld des Ethernet-Telegramms eine Sender-Identifikation festgelegt. Unabhängig von der MAC-Ursprungs-Adresse des jeweiligen Ethernet-Bausteins kann eine Implementierung der Anwendungsschicht und der Kommunikationsschicht erfolgen, wobei lediglich hinsichtlich der Ziel-Adressen, vorzugsweise Multicast-Adressen, eine Berücksichtigung hinsichtlich der Kommunikationsschicht und eventuell noch der Anwendungsschicht erfolgen muss. Die insbesondere mehreren Multicast-Adressen sind den Ethernet-Bausteinen der jeweiligen Rechengeräte vorzugsweise vorgebbar.

In einer vorteilhaften Ausführungsform des Verfahrens wird beim Erzeugen des Ethernet-Telegramms in dem Ethernet-Nutzdaten-Feld des Ethernet-Telegramms eine TelegrammNummer festgelegt, die für jedes Telegramm, bei denen die MAC-Zieladresse und die Sender-Identifikation übereinstimmen, um einen festen Wert erhöht oder erniedrigt wird. Dadurch wird eine zusätzliche Datensicherung zur bereits in der Ethernet-Technik vorhandenen CRC-Überprüfung geschaffen. Hierdurch kann überprüft werden, ob ein Ethernet-Telegramm von mehreren verlorengegangen ist.

In einer vorteilhaften Weiterbildung des Verfahrens wird ein zu versendendes Ethernet-Telegramm nach Ablauf einer festgelegten Zeitspanne versandbereit gesetzt, wobei die Zeitspanne mit dem Zeitpunkt beginnt, zu dem das zuvor versandte Ethernet-Telegramm versendet wurde, wobei die MAC-Zieladresse und die Sender-Identifikation von zu versendendem und versandtem Ethernet-Telegramm übereinstimmen. Hierdurch wird ein Mechanismus geschaffen, der vorteilhaft zur Verringerung der Netzwerklast beiträgt. Insbesondere wird verhindert, dass ein Rechengerät das Ethernet-Netzwerk in fehlerhafter Weise mit Ethernet-Telegrammen "überflutet".

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es werden für funktionsäquivalente Größen in allen Figuren auch bei unterschiedlichen Ausführungsformen die gleichen Bezugszeichen verwendet.

Nachfolgend werden beispielhafte Ausführungsformen der Erfindung unter Bezugnahme auf die Zeichnung erläutert. In der Zeichnung zeigen
- Figur 1: einen schematisch dargestellten Protokollstapel;
- Figur 2: einen schematisch dargestellten Telegrammaufbau;
- Figur 3a: ein schematisch dargestelltes Adressierungsschema;
- Figur 3b-3d: jeweils ein schematisch dargestelltes Kommunikationsschema; und
- Figur 4 und 5: jeweils eine beispielhafte Ausführung einer Ethernet-Konfiguration.

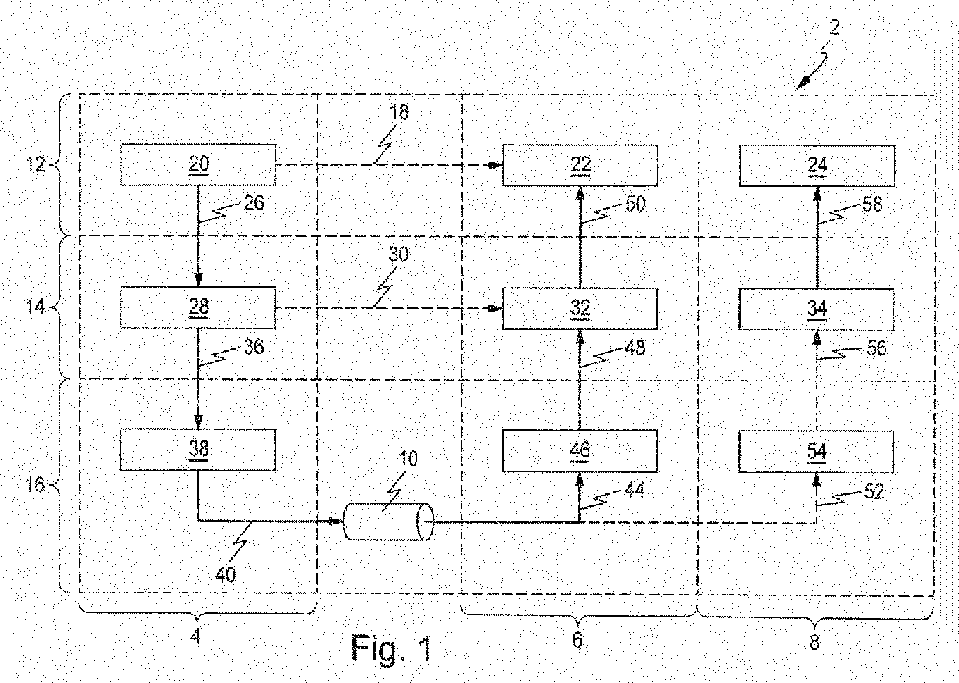

Figur 1 zeigt einen schematisch dargestellten Protokollstapel 2. In vertikaler Richtung sind ein Ursprungs-Rechengerät 4, ein Ziel-Rechengerät 6 und ein weiteres Ziel-Rechengerät 8 dargestellt. Das Ursprungs-Rechengerät 4 ist mit den beiden Ziel-Rechengeräten 6 und 8 über einen schematisch dargestellten Kommunikationskanal 10 physikalisch verbunden. Die Rechengeräte 4, 6 und 8 sind beispielsweise Prozessrechner eines Automatisierungssystems. Die Rechengeräte 4, 6, und 8 bilden ein Ethernet-Netzwerk. Selbstverständlich können auch nur die beiden Rechengeräte 4 und 6 miteinander verbunden sein und ein Ethernet-Netzwerk bilden.

Der Protokollstapel 2 setzt sich aus der Anwendungsschicht 12, der untergeordneten Kommunikationsschicht 14 und der untergeordneten Ethernet-Schicht 16 zusammen, wobei die Schichten 12, 14 und 16 jeweils waagerecht angeordnet sind.

Gemäß einem Pfeil 18 sollen Nutzdaten von einer Ursprungs-Anwendung 20 des Ursprungs-Rechengeräts 4 an eine Ziel-Anwendung 22 des zumindest einen Ziel-Rechengeräts 6 übertragen werden. Ist neben dem Ziel-Rechengerät 6 auch das Ziel-Rechengerät 8 adressiert, so werden die Nutzdaten neben der Übertragung an die Ziel-Anwendung 22 auch an eine Ziel-Anwendung 24 des Ziel-Rechengeräts 8 übertragen, wobei die Übertragung der Nutzdaten über ein einziges noch zu erläuterndes Ethernet-Telegramm erfolgt.

Gemäß einem Pfeil 26 werden zumindest die Nutzdaten an eine Kommunikationseinheit 28 übergeben, wobei von der Ursprungs-Anwendung 20 weitere später erläuterte Protokollinformationen direkt oder indirekt vorgegeben werden können. Gemäß einem Pfeil 30 sollen die Nutzdaten zusammen mit den weiteren Protokollinformationen an eine Ziel-Kommunikationseinheit 32 des Ziel-Rechengeräts 6 übermittelt werden. Bei entsprechender Adressierung sollen die Nutzdaten mit weiteren Protokollinformationen auch an eine weitere Ziel-Kommunikationseinheit 34 des Ziel-Rechengeräts 8 übertragen werden.

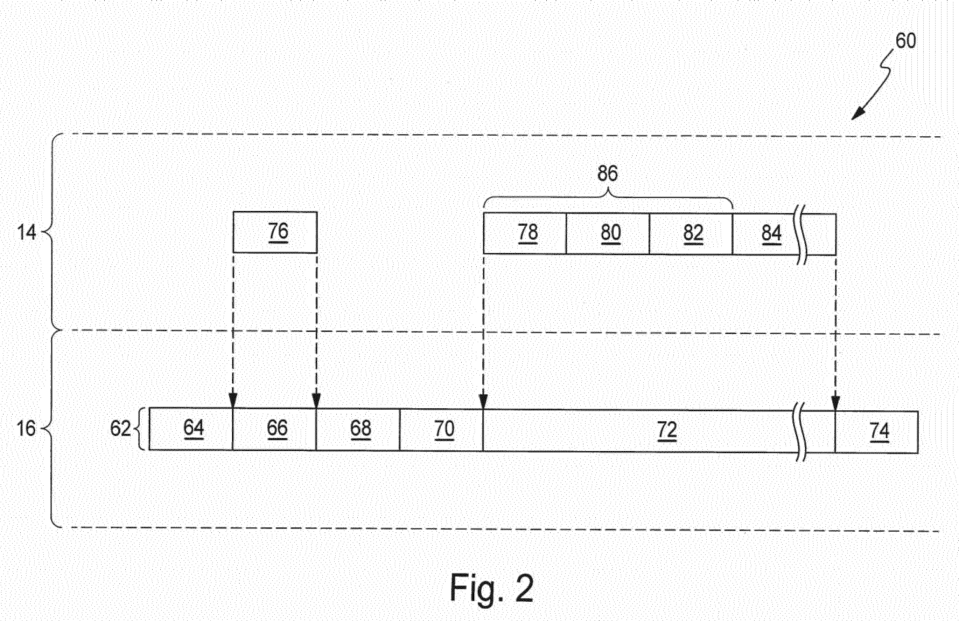

Gemäß einem Pfeil 36 übermittelt die Ursprungs-Kommunikationseinheit 28 die Nutzdaten mit den weiteren Protokollinformationen an einen Ethernet-Baustein 38. Der Ethernet-Baustein 38 erzeugt ein Ethernet-Telegramm, das nachfolgend anhand der Figur 2 näher erläutert wird. Das Ethernet-Telegramm wird somit durch das Ursprungs-Rechengerät 4 erzeugt und umfasst die Nutzdaten, die ebenfalls anhand der Figur 2 näher erläutert werden. Gemäß einem Pfeil 40 wird das Ethernet-Telegramm durch das Ursprungs-Rechengerät 4 versendet und dem Kommunikationskanal 10 zugeführt.

Gemäß einem Pfeil 44 wird das Ethernet-Telegramm von einem Ethernet-Baustein 46 des Ziel-Rechengeräts 6 empfangen. Das Ethernet-Telegramm wird gemäß einem Pfeil 48 der Ziel-Kommunikationseinheit 32 zur Verfügung gestellt bzw. wird die Ziel-Kommunikationseinheit 32 von dem Empfang des Ethernet-Telegramms durch den Ethernet-Baustein 46 benachrichtigt. Gemäß einem Pfeil 50 stellt die Ziel-Kommunikationseinheit 32 die Nutzdaten der Ziel-Anwendung 22 bereit.

Bei entsprechender Adressierung wird das Ethernet-Telegramm gemäß einem Pfeil 52 auch über einen Ethernet-Baustein 54 und gemäß einem Pfeil 56 der Ziel-Kommunikationseinheit 34 bereitgestellt. Gemäß einem Pfeil 58 stellt das Ziel-Rechengerät 8 die Nutzdaten der Ziel-Anwendung 24 bereit.

Figur 1 zeigt damit die Übertragung von Nutzdaten von einer Ursprungs-Anwendung 20 eines Ursprungs-Rechengeräts 4 an eine Ziel-Anwendung 22, 24 zumindest eines Ziel-Rechengeräts 6, 8. Ausgehend von der Kommunikationsschicht 14 wird in der Ethernet-Schicht 16 des Ursprungs-Rechengeräts 4 das Ethernet-Telegramm erzeugt. Zeitlich darauf folgend wird durch die Ethernet-Schicht 16 das Ethernet-Telegramm durch das Ursprungs-Rechengerät 4 versendet. Darauf folgend wird in der Ethernet-Schicht 16 das Ethernet-Telegramm durch das Ziel-Rechengerät 6 empfangen. Darauf folgend werden die Nutzdaten mittels der Kommunikationsschicht 14 durch das Ziel-Rechengerät 6, 8 der Ziel-Anwendung 22, 24 bereitgestellt.

Das Ursprungs-Rechengerät 4 und das Ziel-Rechengerät 6, 8 sind mittels Ethernet-Technik gemäß der Ethernet-Bausteine 38, 46, 54 und dem schematisch dargestellten Kommunikationskanal 10 miteinander verbunden. Die Rechengeräte 4, 6, 8 stellen daher gemeinsam ein Ethernet-Netzwerk dar. Sind die Rechengeräte 4, 6, 8 jeweils ein Teil eines Prozessrechners eines Automatisierungssystems, so bilden die über Ethernet-Technik verbundenen Prozessrechner ein Ethernet-Netzwerk.

Das Ursprungs-Rechengerät 4 ist stets sendeberechtigt. Dies bedeutet, dass das Ursprungs-Rechengerät 4 den Zeitpunkt zum Versenden des Telegramms im Wesentlichen ohne den Einfluss anderer Rechengeräte bestimmt. Die Ursprungs-Anwendung 20 erzeugt die gemäß dem Pfeil 18 zu übertragenden Nutzdaten bzw. stellt die Nutzdaten der Ursprungs-Kommunikationseinheit 28 zur Verfügung. Unter Nutzdaten sind Daten zu verstehen, die eine gewisse Größe nicht überschreiten, wobei die Größe von dem Ethernet-Telegramm und dessen Vorgabe für die maximal aufnehmbare Datengröße abhängt. Zusätzlich kann aber auch eine maximale Größe von dem Ursprungs-Rechengerät 4 vorgegeben werden. Sollten zu versendende Nutzdaten die vorgegebene Größe überschreiten, so werden diese vorzugsweise von der Ursprungs-Kommunikationseinheit 28 fragmentiert und auf mehrere Ethernet-Telegramme verteilt.

Das Ethernet-Telegramm wird von dem Ursprungs-Rechengerät 4 verbindungslos an das Ziel-Rechengerät 6, 8 versendet. Das verbindungslose Versenden des Ethernet-Telegramms bedeutet, dass kein Weg zur Übertragung des Ethernet-Telegramms geschaltet wird bzw. etabliert wird.

Gemäß dem Pfeil 26 löst die Ursprungs-Anwendung 20 die Maßnahmen aus, die zu dem Versenden des Ethernet-Telegramms gemäß dem Pfeil 40 führen. Weder in der Anwendungsschicht 12 noch in der Kommunikationsschicht 14 sind Arbitrierungsmechanismen integriert, die den Zugriff auf den Kommunikationskanal 10 beeinflussen. Jegliche Arbitrierung, also Kanalzugriffskonfliktauflösung, wird durch die Ethernet-Bausteine 38, 46, 45 und/oder den Kommunikationskanal 10 selbst durchgeführt. Das Versenden des Ethernet-Telegramms ausgehend von dem Ursprungs-Rechengerät 4 ist somit nur von den vorgenannten Arbitrierungsmechanismen abhängig und der Zeitpunkt des Versendens des Ethernet-Telegramms wird somit im Wesentlichen von dem Ursprungs-Rechengerät selbst und im Wesentlichen unabhängig von den anderen am Ethernet-Netzwerk teilnehmenden Rechengeräten bestimmt. Das Ursprungs-Rechengerät 4 versendet damit eigenständig das Ethernet-Telegramm.

Die Ethernet-Bausteine 38, 46 und 54 sind handelsübliche Ethernet-Komponenten, die über ebenso handelsübliche Ethernet-Komponenten im Bereich des Kommunikationskanals 10 miteinander verbunden sind. Die Ethernet-Bausteine 38, 46 und 54 sind den Rechengeräten 4, 6 und 8 jeweils zugeordnet. Im Bereich der Kommunikationsschicht 14 und der Anwendungsschicht 12 sind die entsprechenden Anwendungen bzw. Einheiten vorzugsweise als Software ausgebildet. Im Bereich der Kommunikationsschicht 14 und der Anwendungsschicht 12 ist es aber selbstverständlich auch möglich, insbesondere die Einheiten 28, 32 und 34 in Hardware auszubilden.

Zwei Rechengeräte, beispielsweise das Ursprungs-Rechengerät 4 und das Ziel-Rechengerät 6, oder mehr als zwei Rechengeräte bilden ein Ethernet-Netzwerk, soweit sie über die jeweiligen Ethernet-Bausteine 38, 42, 46 und den Kommunikationskanal 10 miteinander verbunden sind. Die Ethernet-Technik umfasst hierbei die Ethernet-Bausteine 38, 42, 46 und Ethernet-Komponenten im Bereich des Kommunikationskanals 10 wie beispielsweise entsprechende Kabel und/oder einen Switch.

Figur 2 zeigt einen schematisch dargestellten Telegrammaufbau 60 mit dem Ethernet-Telegramm 62, das nach Figur 1 von dem Ethernet-Baustein 38 erzeugt und gemäß dem Pfeil 40 über den Kommunikationskanal 10 versendet wird. Das Ethernet-Telegramm 62 ist somit der Ethernet-Schicht 16 zugeordnet. Das Ethernet-Telegramm 62 umfasst im Wesentlichen ein Präambel-Feld 64, ein MAC-Zieladressen-Feld 66 (MAC = Media Access Control), ein MAC-Ursprungsadress-Feld 68, ein Typ-Feld 70, ein Ethernet-Nutzdaten-Feld 72 sowie ein weiteres Feld 74. Das weitere Feld 74 enthält beispielsweise ein CRC-Feld (CRC = Cyclic Redundancy Check), das zur Aufnahme eines Prüfwerts vorgesehen ist, um Fehler bei der Übertragung des Ethernet-Telegramms 62 auf Seite des Ziel-Rechengeräts 6, 8 zu erkennen. Diese CRC-Funktion ist in den Ethernet-Bausteinen 38, 46 und 54 ausgeführt.

In der Kommunikationsschicht 14 werden eine MAC-Zieladresse 76, eine Sender-Identifikation 78, eine Telegrammnummer 80, eine Datenlänge 82 und die Nutzdaten 84 von der Ursprungs-Kommunikationseinheit 28 des Ursprungs-Rechengeräts 4 vorgegeben. Die Sender-Identifikation 78, die Telegrammnummer 80 und die Datenlänge 82 werden allgemein als weitere Protokollinformationen 86 bezeichnet. Gemäß Figur 1 wird das Ethernet-Telegramm 62 durch das Ursprungs-Rechengerät 4 erzeugt, wobei gemäß dem Pfeil 36 die MAC-Zieladresse 76 in das MAC-Zieladressen-Feld 66 des Ethernet-Telegramms 62 geschrieben wird. Die weiteren Protokollinformationen 86 werden gemeinsam mit den Nutzdaten 84 gemäß dem Pfeil 36 in das Ethernet-Nutzdaten-Feld 72 geschrieben. Das Versenden des Ethernet-Telegramms 62 durch das Ursprungsgerät 4 wird beispielsweise durch das Setzen eines Bits initiiert, wobei das Setzen des Bits dazu führt, dass der Ethernet-Baustein 38 das Telegramm 62 gemäß dem Pfeil 40 versendet.

Beim Erzeugen des Ethernet-Telegramms 62 wird von der Ursprungs-Kommunikationseinheit 28 über die MAC-Zieladresse 76 und über das Einschreiben dieser MAC-Zieladresse 76 in das MAC-Zieladressen-Feld 66 zumindest eines der Ziel-Rechengeräte 6, 8 festgelegt, für dessen zumindest eine Ziel-Anwendung 22, 24 die Nutzdaten 84 bestimmt sind.

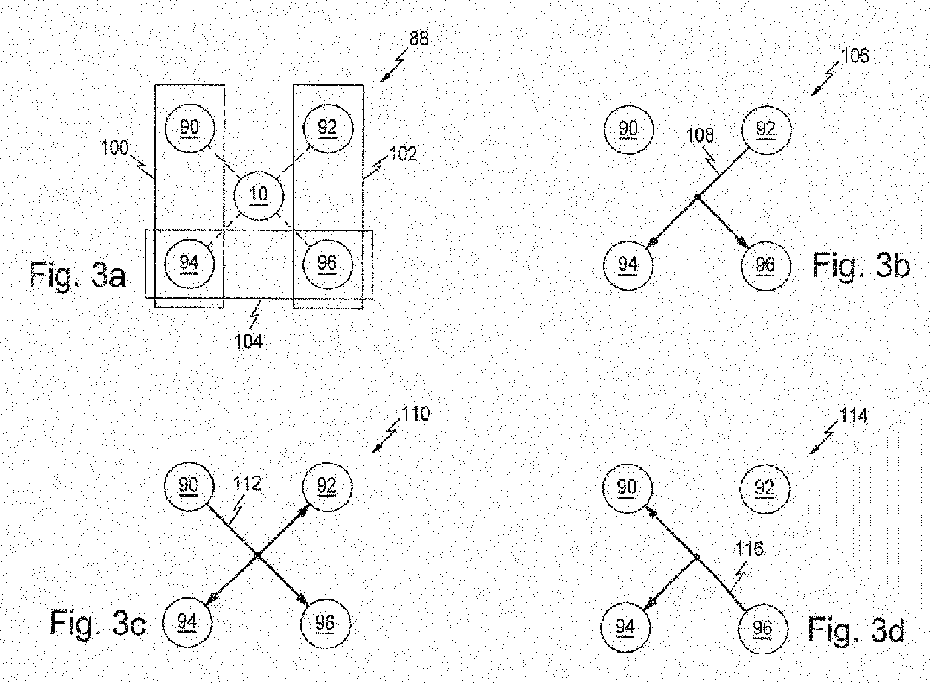

Je nach Adressierungsart über die MAC-Zieladresse 76, wobei die Adressierungsart zu den Figuren 3a bis 3d näher erläutert wird, sorgen der Kommunikationskanal 10 und/oder der Ethernet-Baustein 46 bzw. 54 dafür, dass die weiteren Protokollinformationen 86 und die Nutzdaten 84 gemäß dem Pfeil 48 bzw. 56 der Ziel-Kommunikationseinheit 32 bzw. 34 bereitgestellt werden.

Dadurch, dass beim Erzeugen des Ethernet-Telegramms 62 in dem Ethernet-Nutzdaten-Feld 72 des Ethernet-Telegramms 62 eine Sender-Identifikation 78 durch die Ursprungs-Kommunikationseinheit 28 festgelegt wird, können zum einen dem Ursprungs-Rechengerät 4 mehrere Sender-Identifikationen 78 zugeordnet werden und zum anderen ist der in Figur 1 gezeigte Protokollstapel 2 in der Anwendungsschicht 12 und in der Kommunikationsschicht 14 unabhängig von einer fest in dem Ethernet-Baustein 38 vorgegebenen MAC-Ursprungsadresse. Die Sender-Identifikation 78 hat vorzugsweise eine Größe von 1 Byte.

Die Telegrammnummer 80 wird beim Erzeugen des Ethernet-Telegramms 62 in dem Ethernet-Nutzdaten-Feld 72 des Ethernet-Telegramms 62 durch die Ursprungs-Kommunikationseinheit 28 festgelegt. Die Telegrammnummer 80 wird für jedes folgende Ethernet-Telegramm 62, bei denen die MAC-Zieladresse 76 und die Sender-Identifikation 78 übereinstimmen, durch die Ursprungs-Kommunikationseinheit 28 um einen festen Wert erhöht oder erniedrigt, vorzugsweise um Eins erhöht. Nach einem Erreichen des größten bzw. kleinsten möglichen Wertes wird für das folgende Ethernet-Telegramm 62 der kleinste bzw. größte Wert für die Telegrammnummer 80 festgelegt. Die Ziel-Kommunikationseinheit 32 bzw. 34 kontrolliert die Telegrammnummern 80 der eintreffenden weiteren Protokollinformationen 86 und der zugehörigen Nutzdaten 84.

Die Datenlänge 82 zeigt an, welche Größe die in dem Ethernet-Nutzdatenfeld 72 nachfolgenden Nutzdaten 84 haben. Die Ziel-Kommunikationseinheit 32, 34 kann anhand der vorgegebenen Datenlänge 82 den Bereich bestimmen, in dem sie die Nutzdaten 84 in dem Ethernet-Nutzdatenfeld 72 vorfindet, um diese Nutzdaten 84 gemäß dem Pfeil 50, 58 der Ziel-Anwendung 22, 24 vorzugeben bzw. bereitzustellen. Für die Datenlänge 82 sind vorzugsweise 2 Byte vorgesehen.

Figur 3a zeigt ein Adressierungsschema 88 für Rechengeräte 90, 92, 94 und 96, die über den schematisch gezeigten Kommunikationskanal 10 miteinander verbunden sind. Der Kommunikationskanal 10 ist Teil der Ethernet-Technik. Die Rechengeräte 90, 92, 94 und 96 sind sowohl als Ursprungs-Rechengerät als auch als Ziel-Rechengerät ausgebildet.

Alle Rechengeräte 90, 92, 94 und 96 sind über eine gemeinsame Broadcast-Adresse als Ziel-Rechengerät auswählbar. Über die Einfügung der Broadcast-Adresse als MAC-Zieladresse 76 in das MAC-Zieladressen-Feld 66 des Ethernet-Telegramms 62 können damit alle Rechengeräte 90 bis 96 adressiert werden.

Darüber hinaus sind eines oder mehrere der Rechengeräte 90 bis 96 über eine Multicast-Adresse als Ziel-Rechengerät auswählbar. Damit kann über eine Einfügung der Multicast-Adresse als MAC-Zieladresse 76 in das MAC-Zieladressen-Feld 66 des Ethernet-Telegramms 62 eine Gruppe 100, 102 oder 104 von verbundenen Rechengeräten 90 bis 96 adressiert werden. Allgemein werden hinsichtlich der Broadcast-Adresse und der Multicast-Adresse beim Erzeugen des Ethernet-Telegramms 62 über die MAC-Zieladresse 76 mehrere Ziel-Rechengeräte 90 bis 96 zum Empfang des Ethernet-Telegramms 62 festgelegt. Selbstverständlich kann aber auch nur eines der Rechengeräte 90 bis 96 über die Multicast-Adresse adressiert werden, wenn kein anderes der Rechengeräte 90 bis 96 dieselbe Multicast-Adresse aufweist.

Grundsätzlich ist die Broadcast-Adresse in der Ethernet-Technik allgemein festgelegt. Hinsichtlich der Multicast-Adresse können je nach Ausbildung der Ethernet-Bausteine 38, 46 und 54 mehrere Multicast-Adressen hinterlegt werden, so dass, wie in Figur 3a hinsichtlich der Rechengeräte 94 und 96 gezeigt, ein Rechengerät 94, 96 mehrere Multicast-Adressen aufweisen kann. Hierzu werden diese Multicast-Adressen den Ethernet-Bausteinen 38, 46 und 54 vorzugsweise mittels der jeweiligen Kommunikationseinheit 28, 32, 34 vorgegeben.

Figur 3b zeigt ein Kommunikationsschema 106, wobei das Rechengerät 92 als Ursprungs-Rechengerät fungiert und das Ethernet-Telegramm 62 gemäß einem Pfeil 108 an die Gruppe 104 sendet. Hierzu wird die entsprechende Multicast-Adresse für die Gruppe 104 als MAC-Zieladresse 76 in das MAC-Zieladressen-Feld 66 durch die Kommunikationseinheit 16 des Rechengeräts 92 geschrieben.

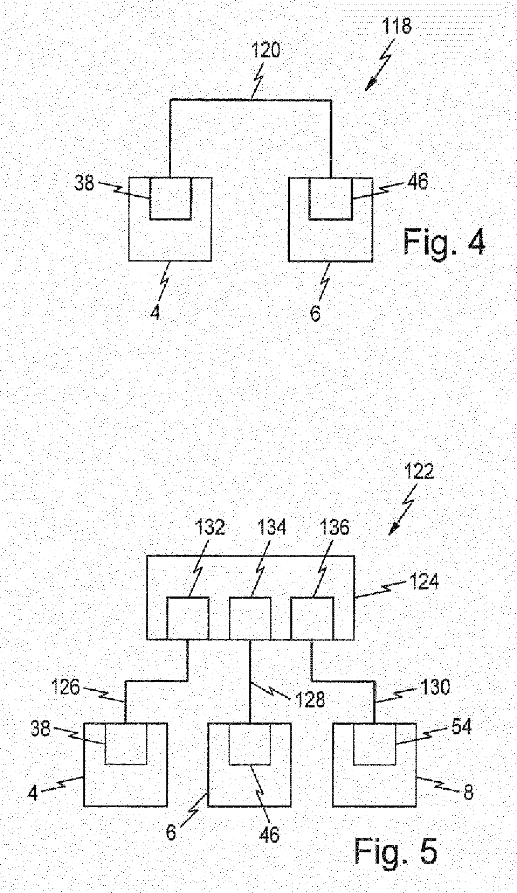

Sind die Rechengeräte 90 bis 96 beispielsweise über einen Switch, der anhand der Figur 5 näher erläutert wird, verbunden, so erkennt der Switch keinen Unterschied zwischen einer Broadcast-Adresse und einer Multicast-Adresse, weshalb dieser Switch ein Ethernet-Telegramm 62 mit einer Multicast-Adresse oder einer Broadcast-Adresse grundsätzlich an alle anderen angeschlossenen Rechengeräte, das heißt in dem in Figur 3b gezeigten Fall an die Rechengeräte 90, 94 und 96 verteilt. Das Rechengerät 90 ist jedoch nicht über die Gruppe 104 adressiert, weshalb der entsprechende Ethernet-Baustein der Ethernet-Schicht 16 des Rechengeräts 90 das Ethernet-Telegramm 62 bereits beim Empfangen verwirft. Dadurch, dass das nicht für das Rechengerät 90 bestimmte Ethernet-Telegramm 62 bereits in der Ethernet-Schicht 16 des Rechengeräts 90, insbesondere durch den zugehörigen Ethernet-Baustein, verworfen wird, werden die Kommunikationsschicht 14 und die Anwendungsschicht 12 des Rechengeräts 90 entlastet, da diese sich nicht mit der Weiterbehandlung dieses verworfenen Ethernet-Telegramms 62 beschäftigen müssen.

Figur 3c zeigt ein Kommunikationsschema 110, wobei das Rechengerät 90 gemäß einem Pfeil 112 das Ethernet-Telegramm 62 an die übrigen Rechengeräte 92, 94 und 96 versendet. Bei dem Kommunikationsschema 110 adressiert das Rechengerät 90 das entsprechende Ethernet-Telegramm 62 mittels der Broadcast-Adresse, um alle übrigen Rechengeräte 92 bis 96 über die MAC-Zieladresse 76 zu adressieren.

Figur 3d zeigt ein Kommunikationsschema 114, wobei gemäß einem Pfeil 116 das Rechengerät 96 das Ethernet-Telegramm 62 an die Gruppe 100, also die Rechengeräte 90 und 94 übermittelt. Analog, wie bereits zu Figur 3b hinsichtlich des Rechengeräts 90 ausgeführt, verwirft das Rechengerät 92 in Figur 3d bereits beim Empfangen das hier versendete Ethernet-Telegramm 62.

Die in den Figuren 3b bis 3d gezeigten Kommunikationsschemata 106, 110 und 114 laufen beispielsweise zeitlich aufeinander folgend über den Kommunikationskanal 10 ab. Hierbei ist es beispielsweise möglich, dass die Rechengeräte 92, 90 und 96 zum gleichen Zeitpunkt versuchen, die jeweiligen Ethernet-Telegramme 62 zu versenden. Dieses gleichzeitige Versenden schafft einen Kanalzugriffskonflikt, da nur ein einziger gemeinsamer Kommunikationskanal 10 zur Verfügung steht. Die Ethernet-Technik sorgt hierbei für die Auflösung dieses Konflikts, wobei je nach verwendeter Ethernet-Technik unterschiedliche Mechanismen greifen. Sind die Rechengeräte 90 bis 96 beispielsweise über den noch zu erläuternden Switch miteinander verbunden, so können die Rechengeräte 92, 90 und 96 gleichzeitig ihre Ethernet-Telegramme 62 an den Switch versenden, wobei der Switch die Ethernet-Telegramme 62 zwischenspeichert und dann an die Netzwerkteilnehmer, das heißt die Rechengeräte 90 bis 96 verteilt.

Ein Rechengerät 90 bis 96 kann sich zum Versenden eigene Zeitschlitze zuteilen, um beispielsweise zu verhindern, dass dieses Rechengerät 90 bis 96 zu viele Ethernet-Telegramme 62 über den Kommunikationskanal 10 verschickt. Beispielsweise kann ein zu versendendes Ethernet-Telegramm 62 erst nach Ablauf einer festgelegten Zeitspanne versandbereit gesetzt werden beziehungsweise versendet werden, wobei die Zeitspanne mit dem Zeitpunkt beginnt, zu dem das zuvor versandte Ethernet-Telegramm 62 versendet wurde, und wobei die MAC-Zieladresse 76 und die Sender-Identifikation 78 von zu versendendem und versandten Ethernet-Telegramm 62 übereinstimmen. Oder aber es werden feste Zeitpunkte, die beispielsweise zeitlich äquidistant voneinander beabstandet sind, zum Versenden jeweils eines der Ethernet-Telegramme 62 durch das Ursprungs-Rechengerät 4 selbst vorgegeben.

Figur 4 zeigt eine beispielhafte Ausführung einer Ethernet-Konfiguration 118, wobei das Ursprungs-Rechengerät 4 mit dem Ziel-Rechengerät 6 über eine Verbindung 120, beispielsweise ein Ethernet-Cross-Kabel, verbunden ist. Ein Ethernet-Cross-Kabel ist durch vertauschte Kabeladern zum Senden und Empfangen von Signalen gekennzeichnet und erlaubt es, zwei Ethernet-Bausteine miteinander zu verbinden, die eine gleiche Belegung der einzelnen Adern vorsehen. Die oben ausgeführten Verfahren zum Übertragen von Nutzdaten von dem Ursprungs-Rechengerät 4 zu dem Ziel-Rechengerät 6 sind über dieses Ethernet-Netzwerk ausführbar.

Figur 5 zeigt eine beispielhafte Ausführung einer Ethernet-Konfiguration 122, wobei das Ursprungs-Rechengerät 4 über den zuvor bereits erwähnten Switch 124 mit den Ziel-Rechengeräten 6 und 8 verbunden ist, wobei der Switch 124 auch als Ethernet-Switch bezeichnet wird. Selbstverständlich weisen die in Figur 5 gezeigten Rechengeräte 4, 6 und 8, wie auch in den Figuren 1 und 4, jeweils die Funktion eines Ursprungs-Rechengeräts und eines Ziel-Rechengeräts auf.

Die Ethernet-Bausteine 38, 46 und 54 der Rechengeräte 4, 6, und 8 sind jeweils über eine entsprechende Verbindung 126, 128 und 130 mit entsprechenden Anschlüssen 132, 134 und 136 des Switchs 124 verbunden. Bei den Verbindungen 126, 128 und 130 handelt es sich vorzugsweise um Ethernet-Kabel. Die Rechengeräte 4, 6 und 8 können in der in Figur 5 gezeigten Anordnung zu einem beliebigen Zeitpunkt über die Verbindungen 126, 128 und 130 Ethernet-Telegramme 62 versenden, wobei der Switch 124 für eine Konfliktauflösung sorgt, indem dieser eintreffende Ethernet-Telegramme 62 zwischenspeichert und dann auf die entsprechenden Anschlüsse 132, 134 und 136 und damit an die Rechengeräte 4, 6 und 8 sendet. Daher wird der Switch 124 auch als Store-and-Forward-Switch bezeichnet.

Die vorstehend beschriebenen Verfahren können als Computerprogramm für zumindest eines der Rechengeräte 4, 6, 8, 90, 92, 94 oder 98 ausgeführt werden. Das Rechengerät 4, 6, 8, 90, 92, 94 oder 98 ist dazu geeignet, die vorstehend beschriebenen Verfahren als Computerprogramm auszuführen. Ein Prozessrechner eines Automatisierungssystems umfasst das Rechengerät 4, 6, 8, 90, 92, 94 oder 98, insbesondere einen Mikroprozessor. Der Prozessrechner und/oder das Rechengerät 4, 6, 8, 90, 92, 94 oder 98 umfasst ein Speichermedium, auf dem das Computerprogramm abgespeichert ist. Über die Ethernet-Technik verbundene Prozessrechner eines Automatisierungssystems bilden ein Ethernet-Netzwerk. Zwei Prozessrechner können direkt oder über den Switch 124 miteinander verbunden sein. Mehr als zwei Prozessrechner sind über den Switch 124 miteinander verbunden.

## Patentansprüche

1. Verfahren zum Übertragen von Nutzdaten (84) von einer Ursprungs-Anwendung (20) eines Ursprungs-Rechengeräts (4) an eine Ziel-Anwendung (22; 24) zumindest eines Ziel-Rechengeräts (6; 8), wobei das Ursprungs-Rechengerät (4) und das Ziel-Rechengerät (6; 8) mittels Ethernet-Technik verbunden sind, und wobei das Verfahren folgende zeitlich aufeinanderfolgende Schritte umfasst:

2. Erzeugen eines Ethernet-Telegramms (62) durch das Ursprungs-Rechengerät (4), wobei das Telegramm (62) die Nutzdaten (84) umfasst, und

3. Versenden des Ethernet-Telegramms (62) durch das Ursprungs-Rechengerät (4) an das Ziel-Rechengerät (6; 8),
**dadurch gekennzeichnet,**
**dass** beim Erzeugen des Ethernet-Telegramms (62) über eine MAC-Zieladresse (76) immer genau dasjenige, zumindest eine Ziel-Rechengerät (6; 8) festgelegt wird, für dessen Ziel-Anwendung (22; 24) die Nutzdaten (84) bestimmt sind, dass das Ursprungs-Rechengerät (4) stets sendeberechtigt ist, und dass das Ethernet-Telegramm (62) verbindungslos an das Ziel-Rechengerät (6; 8) versendet wird.

4. Verfahren nach Anspruch 1, wobei über die MAC-Zieladresse (76) alle über die Ethernet-Technik verbundenen Rechengeräte (90, 92, 94 ,96) adressiert werden.

5. Verfahren nach Anspruch 1, wobei über die MAC-Zieladresse (76) eine Gruppe (100; 102; 104) von über die Ethernet-Technik verbundenen Rechengeräten (90, 92, 94 ,96) adressiert wird.

6. Verfahren nach Anspruch 3, wobei ein nicht über die Gruppe (104; 100) von Rechengeräten adressiertes Rechengerät (90; 92) das Ethernet-Telegramm (62) bereits beim Empfangen verwirft.

7. Verfahren nach einem der vorstehenden Ansprüche, wobei beim Erzeugen des Ethernet-Telegramms (62) in einem Ethernet-Nutzdaten-Feld (72) des Ethernet-Telegramms (62) eine der Ursprungs-Anwendung (20) und/oder dem Ursprungs-Rechengerät (4) zugeordnete Sender-Identifikation (78) festgelegt wird.

8. Verfahren nach Anspruch 5, wobei beim Erzeugen des Ethernet-Telegramms (62) in dem Ethernet-Nutzdaten-Feld (72) des Ethernet-Telegramms (62) eine TelegrammNummer (80) festgelegt wird, die für jedes folgende Ethernet-Telegramm (62), bei dem die MAC-Zieladresse (76) und die Sender-Identifikation (78) übereinstimmen, um einen festen Wert erhöht oder erniedrigt wird.

9. Verfahren nach Anspruch 5 oder 6, wobei ein zu versendendes Ethernet-Telegramm (62) nach Ablauf einer festgelegten Zeitspanne versandbereit gesetzt wird und/oder versendet wird, wobei die Zeitspanne mit dem Zeitpunkt beginnt, zu dem das zuvor versandte Ethernet-Telegramm (62) versandbereit gesetzt und/oder versendet wurde, und wobei die MAC-Zieladresse (76) und die Sender-Identifikation (78) von dem zu versendenden Ethernet-Telegramm (62) und dem versandten Ethernet-Telegramm (62) übereinstimmen.

10. Computerprogramm für ein Rechengerät (4; 6; 8; 90; 92; 94; 98), das dazu geeignet ist, das Verfahren nach einem der vorstehenden Ansprüche auszuführen.

11. Prozessrechner eines Automatisierungssystems, das mit einem Rechengerät (4; 6; 8; 90; 92; 94; 98) insbesondere einem Mikroprozessor versehen ist, auf dem ein Computerprogramm nach dem Anspruch 8 lauffähig ist.

12. Speichermedium für einen Prozessrechner eines Automatisierungssystems nach Anspruch 9 auf dem ein Computerprogramm nach Anspruch 8 abgespeichert ist.

13. Ethernet-Netzwerk mit zumindest zwei über Ethernet-Technik verbundenen Prozessrechnern nach dem Anspruch 9.

14. Ethernet-Netzwerk nach Anspruch 11, wobei die Prozessrechner über einen Ethernet-Switch (124) miteinander verbunden sind.
